# EUROPEAN PATENT APPLICATION

(11) **EP 1 835 769 A1**
(43) Date of publication of application: **19.09.2007**
(21) Application number: 06005099.4
(22) Date of filing: 13.03.2006
(51) Int. Cl.: H04Q 7/22

(54) **Method and node enabling the construction of an overlay network within a communications system**

(71) Applicant: SIEMENS AKTIENGESELLSCHAFT, 80333 München (DE)
(72) Inventor: Andersen, Frank-Uwe, 10625 Berlin (DE); Caviglione, Luca, CAP 16142 Genova (IT); Davoli, Franco, CAP 16154 Genova (IT); Hossfeld, Tobias, 97074 Würzburg (DE)

(57) **Abstract**

A method for a plurality of nodes present in a communications system to form an overlay network comprising the steps of:
- executing by each node of said plurality, upon start up, of a bootstrap procedure acquiring a node identifier and an address of at least one other node present in said communications system;
- setting up, using said node identifier and said address a communication with said at least one other node and forming said overlay network wherein any communication between said nodes is sent over said overlay network.

## Description

### Field of the invention

The invention is used in a communications system to enable an overlay network to be constructed, allowing direct communication between nodes present in the communications system.

### Summary of the invention

Communications systems today such as mobile communications systems comprise of different networking and access technologies. These technologies are not fully integrated nor are they optimised to take into account other existing technologies. In the event of a UE (user equipment) wishing to change from one access technology to another, commonly known as a VHO (vertical handoff or vertical handover), time consuming actions such as signalling a central controller or scanning a radio spectrum, have to be performed before the actual change can be made. The same is also applicable when a UE wishes to perform an HHO (horizontal handoff or horizontal handover) within the same access technology.

In order to overcome this incompatibility between access technologies, a solution has been implemented taking into account such communications systems as wireless or mobile systems and their evolution beyond the current technologies in use, which are based on standards supporting GSM (Global System for Mobile Communications), UMTS (Universal Mobile Telephone System), or WLAN (Wireless Local Access Network).

The solution envisages that future communications systems will comprise of a multitude of access technologies used to connect UEs, (referred henceforth also as MSs (mobile stations or MTs (mobile terminals)) to core networks such as the PSTN (Public Switched Telephone Network) or to the Internet.

According to this solution, measurement reports (referred henceforth also as measurement information) are gathered by numerous UEs. These reports are then transmitted to an entity in the system, stored there, and upon a request from a UE, analysed, and the information extracted enabling a UE to change access technology or not is then transmitted back to the requesting UE.

The WINNER (Wireless World Initiative New Radio) project (https://www.ist-winner.org/), proposes that the entity receiving and storing the measurement reports further comprises of a decision mechanism, which upon receiving a request from a UE, retrieves the necessary measurement reports, analyses them, generates a message and transmits it back to the UE. This message comprises of information indicating to the UE the appropriate moment for changing access technology.

However, this solution has the drawback that the entity that uses the decision mechanism, for example a network management entity such as a NMS (network management system) or a dedicated computer or server, is centrally located within the communications system.

All measurement reports have to be transmitted to the entity from all UEs within the communications system; this leads to an increase in the signalling overhead reducing the capacity of the system to transmit data that does not include these measurement reports. The efficiency of the whole communications system is thus reduced.

Furthermore, it is a necessary requirement for the entity to have adequate storage resources, for example a database, capable to maintain all the different measurement reports received and adequate processing capacities to retrieve and analyse the stored information. As the number of UEs increases within a communications system, so will the number of measurement reports increase, requiring a large investment in hardware storage facilities for storing the measurement reports, as well as processing power in order to be able to generate information for a number of UEs requesting it.

Additionally, as the numerous measurement reports and the transmitted messages have to travel through the communications system, the time required to gather all of them and transmit back a message on request, greatly reduces the possibility of a fast and seamless change of access technology for a UE. The fact also, that a large number of hops required to reach a destination is large, further reduces system efficiency.

Furthermore, the entity, being centrally located, constitutes a SPF (Single Point of Failure) and so redundancy is required in order to ensure that in case of a failure the mechanism will still function. This redundancy also increases the amount of hardware investment required. Moreover, as there will exist at least two such entities, one being active and the other one in standby mode, synchronisation of the stored measurement reports must be performed regularly, further increasing signalling, processing requirements and time delays.

Moreover, this solution is not adaptable to an increase of UEs, therefore in order to compensate for an eventual increase in the number of UEs present, over-dimensioning is necessary, resulting in a waste of resources and increasing the amount of cash investment needed.

Furthermore, each access point (AP) (referred henceforth also as "node", "access node", "attachment point" (AP)), to which a UE is in communication, needs to be aware of neighbouring access points in order to be able to perform a handover request quickly and efficiently. For this, it is necessary for an access point to acquire the appropriate routing information, in order to provide routing directions to a destination point, for messages/requests that need to be transmitted within the communications system.

Currently, when designing a communications system, access points are assigned unique identifiers, allowing them to recognise neighbouring access points. The drawback with this solution is that it is highly structured and hierarchical and it is not flexible enough to adapt as more and more access technologies are implemented into communications systems, each access technology having its own access points. Additionally, it is also harder to assign unique identifiers that provide clear neighbouring indications when a multitude of different access points using different access technologies are present.

A solution to the above issue has been to let each access point generate its own unique identifier. This unique identifier can be either a random 160-bit identifier or a 160-bit identifier resulting from the combination of its assigned IP (internet protocol) address or MAC (Media Access Control) address, with a hash function such as SHA-1 (secure hash algorithm-1), defined in the "Secure Hash Standard, FIPS PUB 180-1, 17-04-1995". Each access point then transmits, for example via a broadcast message, its unique identifier. Access points on receiving such transmissions; compare the unique identifier with their own generated identifier. Through the comparison, identifiers that have an arithmetic value close to the identifier of the access point making the comparison, either a higher or a lower one, are deemed to be neighbouring access points. In this way a routing table is completed.

The drawback with this solution is that the routing table built does not reflect the number of hops between access points. An access point appearing to be a neighbouring one can be more than one hop away. Thus, a reduction in the time required for message to be transmitted is not achieved.

A need therefore exists for a technique that can provide requested information in a simple, fast and efficient way, so that a change of access technology can be executed seamlessly without any reduction in the efficiency of the communications system nor increasing the amount of signalling traffic, as well as overcoming the drawback of having a SPF in the communications system. Additionally, this technique also needs to provide for an efficient and guaranteed way in which routing tables are created, ensuring that handover messages need only travel a minimum distance through the communications system, as well as ensuring that the information contained by the routing tables reflects true neighbouring access points.

With the present invention, the above mentioned issues are resolved. The proposed technique allows for nodes in a communications system to be able to simply and efficiently make their presence known to other nodes without having to increase the amount of signalling or transmitting information over a large number of hops by forming an overlay network. By forming an overlay network, nodes communicate with each other as in a peer to peer network, thus simplifying the management of the communications system as well as communicating with each other in a fast manner. Furthermore, by exchanging routing tables and the information contained in them, it allows nodes to have up to date information relating to neighbouring nodes.

The technique is achieved by the teachings contained in the independent method and node claims.

Said method claim allows a plurality of nodes present in a communications system to form an overlay network comprising the steps of:
- executing by each node of said plurality, upon start up, of a bootstrap procedure acquiring a node identifier and an address of at least one other node present in said communications system;
- setting up, using said node identifier and said address a communication with said at least one other node and forming said overlay network wherein any communication between said nodes is sent over said overlay network.

Said node claim comprises of means arranged to execute the steps of method claim 1.

Further advantages can be seen in the dependent claims wherein:

Preferably the overlay network spans the communications system, thus providing the whole communications system with a parallel network for allowing communications and exchange of information between nodes to be effected in a simply and efficient manner.

Preferably, only node identifiers are used for addressing purposes between nodes, thus simplifying the addressing scheme used and reducing the overhead of transmitted messages.

Preferably, the nodes exchange their routing tables once the communication has been set up between them, thus enabling each node to acquire information about other nodes present and so be in the position to set up further communications to other nodes.

Preferably, the node identifier comprises of a position reference of its respective node, allowing a node when receiving the node identifier, to identify the location of the node identifier's node and verify whether it is a neighbouring node or not.

Preferably, the node identifier further comprises of an access technology reference of its respective node allowing a node when receiving the node identifier, to further identify the type of access technology used by the node identifier's node and so verify whether a horizontal or vertical handover is possible to that node.

### Short description of the drawings

The present invention will become more apparent from the description given herein below and from the accompanying drawings which are given by way of illustration only, and thus are not limitative of the present invention, and wherein:
Fig. 1 depicts a communications system wherein the prior art solution is implemented.
Fig. 2 depicts a communications system wherein the inventive technique is implemented.
Fig. 3 shows in block diagram form the arrangement of means required to execute the inventive technique.

### Detailed description of the invention

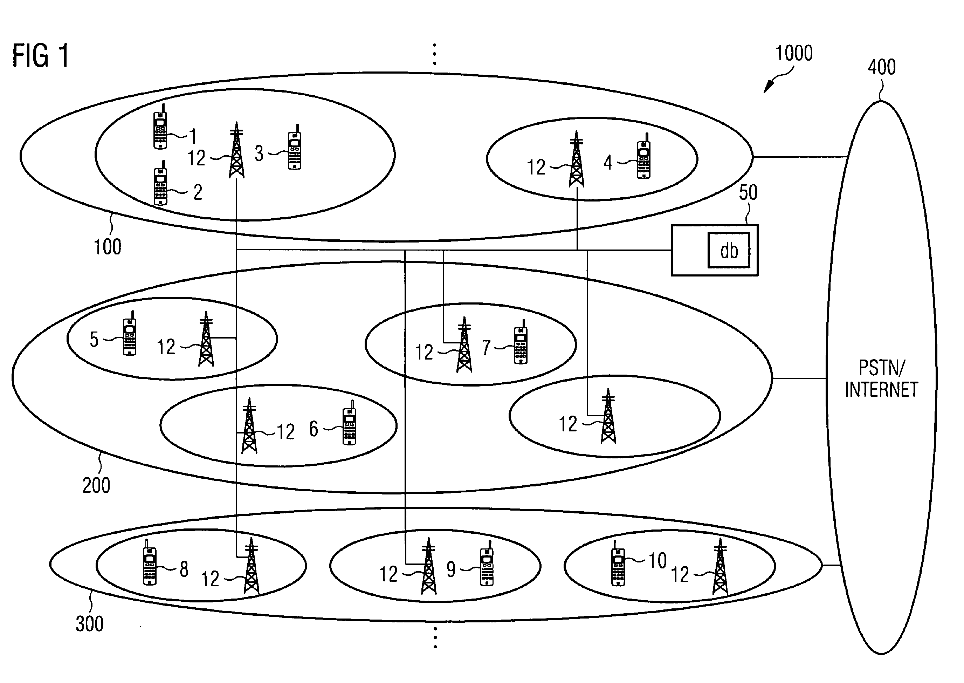

Figure 1 depicts a communications system 1000 implementing the current state of the art solution for changing the access technology. The communications system 1000 comprises of a plurality of systems 100, 200, 300. For reasons of ease of understanding only three such systems 100, 200, 300 are depicted.

Each one of these systems 100, 200, 300 comprises of a particular access technology used within each system respectively. For example system 100 uses GSM access technologies, system 200 UMTS access technologies, system 300 WLAN access technologies.

Each system 100, 200, 300 is in turn coupled to a further system 400, which is a PSTN (public switched telephone network) and/or the internet. Systems 100, 200, 300 comprise of the required devices and or mechanisms arranged for effectuating a connection with system 400. However, it is apparent to anyone skilled in the art that communications system 1000 can comprise of more systems. In order to permit a change of access technology, at least two systems are required.

Each one of systems 100, 200, 300 spans the complete communications system 1000 and/or parts of it, depending on the design of each individual system 100, 200, 300.

Within the communications system 1000 a plurality of mobile stations exist and are distributed within system 100, 200, 300. These stations are depicted with numerals 1, 2, 3, 4, 5, 6, 7, 8, 9 and 10. Naturally, a person skilled in the art would know that more or less than the depicted mobile stations can exist.

Each system 100, 200, 300 is respectively further subdivided into smaller coverage areas. These coverage areas are also known in the art as cells. Each coverage area is under the control of an access point (referred henceforth also as access node) 12. Preferably, these access nodes 12, depending on the type of access technology used can be a BSC (base station controller) when a GSM access technology is used, a RNC (radio network controller) when a UMTS access technology is used or a WLAN AN (wireless local area network access node) when the access technology used is that of a wireless LAN. Each access node 12 further comprises of the required means necessary for the connection of the coverage area which it controls and by extension of the systems 100, 200, 300 to system 400.

These means are not depicted in fig.1 for reasons of simplicity, but for example they can comprise of MSCs (Mobile Switching Centres) responsible for the switching functions necessary for interconnections between a system using GSM technology and system 400, or other equivalent means used in other access technologies.

An entity 50, centrally located within communications system 1000 gathers and holds all the required information for managing the communications system 1000. The entity 50 can be for example a central NMS or a network management computer or server used to control and manage the communications network 1000.

When an UE and/or an AP 12 wish to perform a handover within their own system 100 they request, via a transmitted request message, for information pertaining to the handover. This request message is transmitted to entity 50 over communications network 1000. Entity 50 comprises of a decision mechanism and a storage means such as a data base where information pertaining to numerous types of request, one of which being a request for a handover, are stored.

Upon receiving the request the entity 50 and in particular the decision mechanism will retrieve, using retrieving means, the information stored in the storage means, analyse the information, generate a reply and transmit the reply back to the sender. The reply comprises of the necessary information needed by the sender to make a decision.

Furthermore, it is sometimes also required for an UE or an AP 12 to change access technology from one system 100 to another system 200 using a different access technology.

This can be due to the operator wishing to perform load balancing between the two systems, in order to achieve better efficiency and better quality of service or due to the fact that an UE wishes to receive a service or subscribe to a service which is not available in one access technology but is in the other, or simply because one access technology provides a better connection and a better or higher data rate than the existing one.

As in the previous scenario, a request is transmitted to entity 50 over communications network 1000 and in turn entity 50 will provide a reply. Depending on the information provided in the reply a change request can be made. A change of access point during a handover entailing a change of access technology is known as a VHO (vertical handover).

As indicated above, in both cases of handover, all the signalling carrying the request and the reply has to travel throughout the communications system 1000. This causes an increase in the amount of signalling that is transmitted over the network in real time.

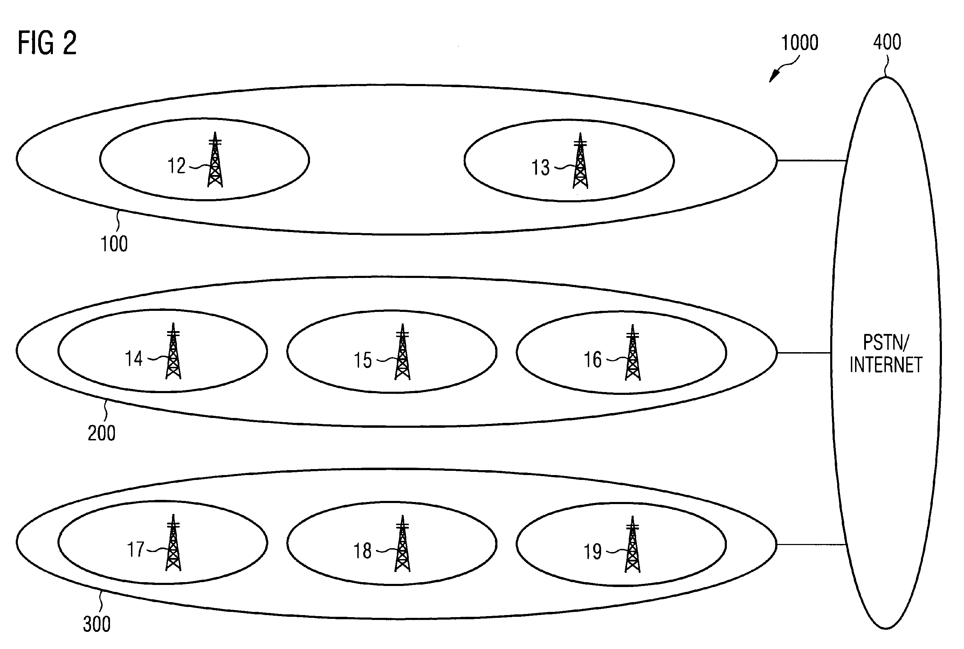

Figure 2, depicts a communications system 1000 implementing the inventive mechanism. Communications system 1000 comprises of a plurality of systems 100, 200, 300. For reasons of ease of understanding only three such systems 100, 200, 300 are depicted. Each one of these systems 100, 200, 300 comprises of a particular access technology used within each system respectively. For example system 100 uses GSM access technologies, system 200 UMTS access technologies, system 300 WLAN access technologies.

Each system 100, 200, 300 is in turn coupled to a further system 400, which is a PSTN (public switched telephone network) and/or the internet. Systems 100, 200, 300 comprise of the required devices and or mechanisms arranged for effectuating a connection with system 400. However, it is apparent to anyone skilled in the art that communications system 1000 can comprise of more systems. In order to permit a change of access technology, at least two systems are required.

Each one of systems 100, 200, 300 spans the complete communications system 1000 and/or parts of it, depending on the design of each individual system 100, 200, 300.

Each system 100, 200, 300 is respectively further subdivided into smaller coverage areas. These coverage areas are also known in the art as cells. Each coverage area is under the control of an access node (AP) 12, 13, 14 , 15, 16, 17, 18, 19. Preferably, these access nodes, depending on the type of access technology used can be a BSC (base station controller) when a GSM access technology is used, a RNC (radio network controller) when a UMTS access technology is used or a WLAN AN (wireless local area network access node) when the access technology used is that of a wireless LAN. Each access node further comprises of the required means necessary for the connection of the coverage area which it controls and by extension of the systems 100, 200, 300 to system 400. These means are not depicted in fig.2 for reasons of simplicity, but for example they can comprise of MSCs (Mobile Switching Centres) responsible for the switching functions necessary for interconnections between a system using GSM technology and system 400, or other equivalent means used in other access technologies.

When an AP 12, joins communications system 1000, for example after being commissioned into service or after a reboot, it will automatically join an overlay network, which is a logical network formed by all APs present in communications system 1000.

Each AP is pre-programmed upon joining communications system 1000 to join the overlay network. In order to join the overlay network, each AP needs a node identifier (ID) in order for it to be identifiable within the overlay network.

The ID can be acquired either by requesting for an ID from a pre-programmed address corresponding to a node (not shown in fig. 1) in the communications system 1000 that receives such requests, generates an ID and then transmits it back to the requesting AP, or by the AP generating its own random ID, if no such address is pre-programmed, based on its own address for example its own IP (internet protocol) or MAC (Media Access Control) address, or by using its position reference and type of access technology used, to generate the ID.

The position reference comprises of a 2-coordinate position reference in a format (x, y) or a 3-coordinate position reference in a format (x, y, z). Where x corresponds to a latitude reference of the position of the AP, y to a longitude reference of the position of the AP and z to the height at which the AP is. This position reference can be found by the AP using GPS (Global Positioning System), a-GPS (assisted-Global Positioning System), cell information or a combination of the above. In such a case the node receiving the request for an ID, will return a message to AP 12 indicating that it has to generate its own ID.

In this example, the node is centrally located in order to deal with ID requests for the whole of communications system 1000, however in an alternative example, each particular system 100, 200, 300 has its own independent node for generating a reply to such requests in order to keep signalling traffic within the boundaries of their respective systems 100, 200, 300. In yet another example, it is possible for each independent node from each system 100, 200, 300 to communicate to a central node in order for management and configuration issues to be logged centrally.

Each AP, depending on the system design implemented by an operator, is arranged to use one or a combination of the above ways for acquiring an ID. Furthermore, the generated IDs conform to the addressing format used in the overlay network, which can be a 160 bit SHA-1 (secure hash algorithm-1) hash address, defined in the "Secure Hash Standard, FIPS PUB 180-1, 17-04-1995" or another addressing scheme, irrespective on whether one node or different nodes receive a request for an ID.

Additionally, upon receiving a reply concerning an ID, AP 12 will also receive the address of another AP, for example AP 15, present in the overlay network to which AP 12 can set up a communication. The address is AP's 15 ID, allowing AP 12 to set up a direct communication.

Once AP 15 has received the message, it will then use the ID identifying AP 12 within the overlay network to set up a connection with AP 12. Naturally, upon reception of the message AP 15 will save the information relating to AP 12. This information can be saved in, for example, a routing table that contains all neighbour relationships or in a database. Furthermore the ID is stored for the duration of time that the AP is part of the overlay network. This is possible through the use of control signalling that are transmitted between the two APs 12, 15. As long as control signalling is received indicating that the AP is active, the receiving AP maintains the ID. In case of a departure from the overlay network, the AP departing transmits a message indicating its departure so that the partner AP can delete the corresponding ID and the partner relationships set up. In the case of failure, a lack of reception of a control signal from an AP within a predetermined time period will trigger an AP to delete the corresponding ID any partner relationships already set up.

In this way, APs can quickly become aware of the presence of neighbouring APs, as information is quickly received by APs. Instead of the information being forwarded to a central device e.g. a NMS (Network Management System) device, which in turn then broadcasts the information onto communications system 1000, entailing a longer period of time and numerous hops for the information to reach APs. Using the inventive technique, after acquiring an ID and setting up a communications link, routing tables and or other information can be exchanged a lot faster between two neighbouring APs. Thus greatly reducing the time and the number of hops required for the propagation of the information. Furthermore, in this way, connections can then be set up quickly and handover partnerships created between APs.

In a further refinement of the inventive technique, once AP 15 has received the information of the presence of AP 12 and has set up a connection via the overlay network, it can on its own accord then forward the information relating to AP 12 to other APs which neighbour it and with which partner relationships have already been set-up.
An AP such as 14, which is a neighbour of AP 15 and has an existing partner relationship with AP 15, can upon receiving a message from AP 15 relating to newly joined AP 12, in turn save it and update its own routing table for example and using the ID set-up a connection via the overlay network to AP 12.

The overlay network is independent of the different systems 100, 200, 300 that comprise communications system 1000. All APs act as peer to peer nodes, resulting in that the intervening systems 100, 200, 300 become transparent. The overlay network spans communications system 1000 and furthermore, it is divided into coverage areas corresponding to each individual system 100, 200, 300 that is part of the overlay.

Additionally, based on the position references and type of access technology of each AP and communicated to other APs either by using the ID, when the generated IDs use the position reference and type of access technology, or by subsequent exchange of information, each AP can derive the location of another AP in relation to its own location by using positioning procedures, and construct a detailed image of the overlay network and whether or not an AP is neighbouring or not. For example AP 12 can derive that AP 14 is a neighbouring AP.

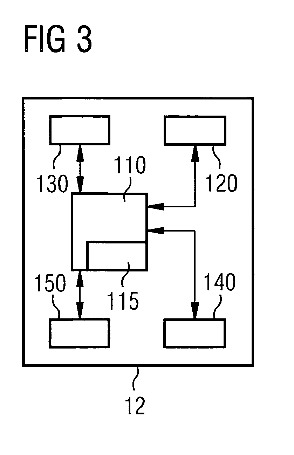

Fig. 3 depicts the different means arranged to execute the technique. Fig. 3 depicts a similar communications system 1000 and comprises of the same apparatuses as fig. 1, however for reasons of clarity only three such apparatuses are shown.

Each AP 12, 13, 14 , 15, 16, 17, 18, 19 comprises of control means 110 arranged to control the functioning of the AP. Control means 110, further comprise of memory means 115 wherein a pre-programmed address is stored that is used to request an ID upon joining communications system 1000. APs 12, 13, 14 , 15, 16, 17, 18, 19 also comprise of transmit/receive means 120 adapted to transmit and receive messages on broadcast and/or dedicated channels, position reference means 130 adapted to provide an AP with a positional reference as previously described. ID generator means 140 are adapted to generate an ID for the AP and are coupled to the control means 110, when the AP is told to generate its own ID. Also coupled to control means 110 are means 150 comprising of entries indicating the different partner relationships formed by the AP, such as a routing table or a database. For example, a routing table comprises of an entry for each AP contained, indicating its ID, position reference, technology type, communication setup, partner relationship etc.

When AP 12 joins communications system 1000, for example after being commissioned into service or after a reboot, control means 110 will automatically join an overlay network, formed by APs already present in communications system 1000. Control means 110 will do this by retrieving from memory means 115 the address such as an IP address of a node to which it must contact, via the transmit/receive means 120, in order to acquire an ID and at the same time performing a bootstrap.

In the case that no such address exists, the control means 110 are arranged to generate a random ID on its own using the ID generator means 140. In the event that its position reference is used as part of the generated ID with the type of access technology used, the position reference means 130 are used to generate the position reference.

Once AP 15 has received the message via transmit/receive means 120, the controller means 110 will use the ID identifying AP 12 within the overlay network to set up a connection with AP 12. The ID is then stored in means 150 of AP 15. The same controller means 110 will also set up a connection to AP 12 using transmit/receive means 120 and set up a partner relationship with AP 12, allowing for handover procedures to be effected.

As stated previously, in a further refinement of the inventive technique, once AP 15 has received the information of the presence of new AP 12 and has set up a connection via the overlay network, controller means 110 can then forward the information relating to AP 12, using transmit/receive means 120, to other APs which neighbour it and with which partner relationships have already been set-up. The information indicating neighbouring APs and partner relationships formed are stored in means 150 and are retrieved from there by the controller means 110.

In a further refinement of the inventive technique, during the procedure for joining the overlay network (bootstrapping) is combined with an authorisation request to increase the security of the overlay network. Again the controller means 110 of AP 12 retrieves an address such as an IP address or a name of a node or a list of other peer nodes to be queried in a specific order that an authorisation request is to be sent to. This node can be identical with the node that provides the ID to AP 12 or it can be a dedicated login server or in the case of list of peer nodes such as nodes 13, 17 for example that are pre-configured to act as authorising nodes. Flooding the overlay network with an authorisation request is disadvantageous, as it would create an increase of traffic and waste of resources, as well as posing a security threat to the communications system.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for a plurality of nodes present in a communications system to form an overlay network comprising the steps of:
- executing by each node of said plurality, upon start up, of a bootstrap procedure acquiring a node identifier and an address of at least one other node present in said communications system;
- setting up, using said node identifier and said address a communication with said at least one other node and forming said overlay network wherein any communication between said nodes is sent over said overlay network.

2. Method according to claim 1, wherein said overlay network spans said communications system.

3. Method according to claim 1, wherein upon said overlay network being formed only node identifiers are used for addressing purposes between nodes.

4. Method according to claims 1 or 3, wherein said nodes exchange their routing tables upon said communication being set up.

5. Method according to any one of the previous claims 1 to 4, wherein said node identifier comprises of a position reference of its respective node.

6. Method according to claim 5, wherein said node identifier further comprises of an access technology reference of its respective node.

7. Method according to any one of the previous claims 1 to 6, wherein upon reception of a routing table, said node sets up communications via said overlay network to all nodes contained in said routing table via said overlay network.

8. Node comprising means arranged to execute the method steps of claims 1 to 7.

9. Node according to claim 8, wherein said node is one of the following:
a base station controller, a radio access controller, a wireless LAN access point.

10. Communications system comprising of at least two nodes according to claims 8 to 9.
